# EUROPÄISCHE PATENTSCHRIFT

(11) **EP 3 443 828 B1**
(45) Veröffentlichungstag und Bekanntmachung des Hinweises auf die Patenterteilung: **23.03.2022**
(21) Anmeldenummer: 18170475.0
(22) Anmeldetag: 03.05.2018
(51) Int. Cl.: A01B 59/06, A01D 41/14, A01D 69/03, F15B 11/00

(54) **HYDRAULISCHE DRUCKMITTELVERSORGUNG UND ADAPTERVENTILEINHEIT**
HYDRAULIC COMPRESSED MEDIUM SUPPLY AND ADAPTER VALVE UNIT
DISPOSITIF D'ALIMENTATION EN FLUIDE SOUS PRESSION HYDRAULIQUE ET UNITÉ DE SOUPAPE D'ADAPTATEUR

(30) Priorität: 17.07.2017 DE 102017115987
(43) Veröffentlichungstag der Anmeldung: 20.02.2019
(73) Patentinhaber: CLAAS Industrietechnik GmbH, 33106 Paderborn (DE)
(72) Erfinder: Ebbes, Björn, 33106 Paderborn (DE); Baum, Robert, 33098 Paderborn (DE)
(74) Vertreter: CLAAS Gruppe

(56) Entgegenhaltungen:
- EP-A2- 1 795 765
- DE-A1- 10 107 139
- DE-A1- 19 536 345
- DE-A1-102004 010 623

## Beschreibung

Die Erfindung betrifft eine hydraulische Druckmittelversorgung eines an ein land- oder bauwirtschaftlich nutzbares Arbeitsfahrzeug kuppelbaren Vorsatz- oder Arbeitsgeräts, wobei eine hydraulische Kuppelvorrichtung einer Arbeitshydraulik des Vorsatz- oder Arbeitsgerätes eine Pumpendruckleitung und eine Tankdruckleitung aufweist, die mit innerhalb der Arbeitshydraulik angeordneten Steuerventilen zur Steuerung von Funktionen des Vorsatz- oder Arbeitsgerätes verbunden sind.

Weiterhin betrifft die Erfindung eine Adapterventileinheit für eine Anordnung zwischen einer Zentralhydraulik eines Arbeitsfahrzeuges und einer Arbeitshydraulik eines mit dem Arbeitsfahrzeug kuppelbaren Vorsatz- oder Arbeitsgeräts.

Landwirtschaftliche Arbeitsfahrzeuge, bei denen es sich beispielsweise um Mähdrescher oder selbstfahrende Feldhäcksler handeln kann, werden mit unterschiedlichen Vorsatzgeräten betrieben, die an das Arbeitsfahrzeug mechanisch an- und abkuppelbar sind. Für den Betrieb des Vorsatzgerätes, das im Falle eines Mähdreschers als Schneidwerk oder Maiserntevorsatz ausgebildet sein kann, ist es außerdem erforderlich, das nachfolgend als Zentralhydraulik bezeichnete Druckmittelsystem der Arbeitsmaschine über hydraulische Kuppelelemente, beispielsweise Remote-Anschlüsse, mit der Arbeitshydraulik des Vorsatzgerätes zu verbinden. Auch bei bauwirtschaftlichen Arbeitsfahrzeuge, die unterschiedliche Vorsatz- oder Arbeitsgeräte aufnehmen können, sind diese in der vorgenannten Weise mit dem Arbeitsfahrzeug kuppelbar. Durch die Unterscheidung in Vorsatzgeräte und Arbeitsgeräte soll verdeutlicht werden, dass es sich auch um Arbeitsgeräte handeln kann, die im Heckbereich oder im Zwischenachsbereich des Arbeitsfahrzeuges betrieben werden.

Von den Herstellern entsprechender Arbeitsfahrzeuge und Vorsatz-oder Arbeitsgeräten werden zwei sich grundlegend unterscheidende Systeme angeboten. Bei einem ersten System sind bei Mähdreschern Wegeventile zur Steuerung der einzelnen Funktionen des Schneidwerks auf dem Mähdrescher angeordnet, wobei von einer Zentralhydraulik des Mähdreschers aus eine Leitung für eine einfachwirkende Druckversorgung sowie zwei gemeinsam gesteuerte Leitungen für eine doppeltwirkende Druckversorgung zum Schneidwerk führen. Bei dem zweiten System sind bei den Mähdreschern Wegeventile zur Ansteuerung der unterschiedlichen Funktionen des Schneidwerks direkt auf diesem angeordnet. In letzterem Fall besteht eine Schnittstelle zwischen der Zentralhydraulik des Mähdreschers und der Arbeitshydraulik des Schneidwerks nur aus einer Druckversorgung und aus einem Rücklauf in einen innerhalb der Zentralhydraulik vorgesehenen Tank. Dabei sind die auf dem Schneidwerk angeordneten Wegeventile elektromagnetisch oder elektrohydraulisch betätigbar, so dass das Schneidwerk neben der vorgenannten hydraulischen Anbindung an die Zentralhydraulik zusätzlich noch mit einem elektronischen Steuersystem des Mähdreschers verbunden wird.

Soll nun ein Schneidwerk eines Herstellers, das über eigene innerhalb der Arbeitshydraulik vorgesehene Wegeventile zur Steuerung der einzelnen Funktionen aufweist, mit einer Zentralhydraulik des Arbeitsfahrzeugs eines anderen Herstellers, die ebenfalls über Wegeventile zur Steuerung einfachwirkender und doppeltwirkender Funktionen des Schneidwerks verfügt, kombiniert werden, so treten erhebliche Probleme auf, beide Systeme hydraulisch aneinander zu koppeln und die Steuerungen aufeinander abzustimmen.

Wie bereits dargelegt, sind in der Regel bei einer Steuerung der Funktionen des Vorsatzgerätes mittels der auf dem Mähdrescher angeordneten Wegeventile zur Anbindung der Arbeitshydraulik des Schneidwerks drei Anschlüsse vorgesehen, von denen ein Anschluss für eine einfachwirkende Stellfunktion und zwei parallel betriebene Anschlüsse für doppeltwirkende Verstellfunktionen vorgesehen sind. Bei einer fehlerhaften Anbindung der Arbeitshydraulik an die Zentralhydraulik kann es sein, dass für das gleiche Schneidwerk bei Anbindung an unterschiedliche Mähdreschertypen in einem Fall der entsprechende Hydraulikzylinder ausfährt und im anderen Fall einfährt. Diese Fehlfunktionen können für die den Mähdrescher bedienende Person absolut problematisch sein und sind auf keinen Fall akzeptabel.

Des Weiteren können zumeist Schneidwerksfunktionen nicht unabhängig voneinander angesteuert werden. Dafür ist es nämlich erforderlich, dass die Ansteuerung am Schneidwerk stets der Schaltlogik des entsprechenden Mähdreschers entspricht. Während eines Klappvorgangs des Schneidwerks kann es zum Beispiel sinnvoll sein, dass mehrere Funktionen gleichzeitig angesteuert werden, so dass der Schneidtisch einfährt, die Haspel sich hebt und gleichzeitig einfährt, um dann das Schneidwerk klappen zu können. Wenn das bei unterschiedlichen Systemen von Mähdrescher und Schneidwerk unter den vorgenannten Bedingungen realisiert werden soll, so sind in erheblichem Umfang zusätzliche Steuerungselemente erforderlich.

Eine hydraulische Druckmittelversorgung eines an einen Mähdrescher kuppelbaren Schneidwerks der im Oberbegriff des Patentanspruchs 1 angegebenen Gattung ist aus der DE 195 36 345 C2 bekannt. Dabei ist eine hydraulische Steuerung der Schneidwerksfunktionen, die aus insgesamt fünf Hydraulikventilen besteht, auf dem Schneidwerk angeordnet. Auf dem Mähdrescher ist ein elektronisches Steuersystem angeordnet, das über Kabel mit elektrischen Stellelementen zur Betätigung der auf dem Schneidwerk vorgesehenen Hydraulikventile verbunden ist. Weiterhin gehen von einer Zentralhydraulik des Mähdreschers eine als Ölzulaufleitung bezeichnete Pumpendruckleitung und eine als Ablaufleitung bezeichnete Tankdruckleitung aus, die über hydraulische Kuppelelemente mit entsprechenden Leitungen der Arbeitshydraulik des Schneidwerks verbindbar sind. Die Arbeitshydraulik weist in diesem Fall einen einfachwirkenden Hydraulikzylinder zum Anheben der Haspel auf, während außerdem zwei doppeltwirkende Hydraulikzylinder zur Horizontalverstellung der Haspel und zur Längsverstellung des Schneidwerkstisches vorgesehen sind. Außerdem erfolgt der Haspelantrieb mittels eines Hydraulikmotors. In einem Gehäuseblock sind die unterschiedlichen Wegeventile angeordnet, die, wie bereits dargelegt, über elektrische Stellantriebe betätigt werden.

Es ist Aufgabe der vorliegenden Erfindung, eine hydraulische Druckmittelversorgung für die Arbeitshydraulik eines Vorsatz- oder Arbeitsgerätes zu schaffen, mit der eine Arbeitshydraulik des mit einer eigenen hydraulischen Steuerung versehenen Vorsatz- oder Arbeitsgerätes mit Druckmittel aus einer Zentralhydraulik der Arbeitsmaschine versorgbar ist, wobei die Zentralhydraulik Druckmittelanschlüsse sowohl für einfachwirkende als auch für doppeltwirkende Stellvorgänge aufweist.

Diese Aufgabe wird, ausgehend vom Oberbegriff der Patentansprüche 1 und 2 durch deren kennzeichnende Merkmale gelöst. Vorteilhafte Ausgestaltungen sind in den von diesen abhängigen Patentansprüchen wiedergegeben, welche jeweils für sich genommen oder in Kombination miteinander einen Aspekt der Erfindung darstellen können.

Danach ist eine hydraulische Druckmittelversorgung umfassend ein land- oder bauwirtschaftlich nutzbares Arbeitsfahrzeug sowie ein daran kuppelbares Vorsatz- oder Arbeitsgerät vorgesehen, bei welcher an zumindest ein hydraulisches Kuppelelement einer Arbeitshydraulik des Vorsatz- oder Arbeitsgerätes eine Pumpendruckleitung und eine Tankdruckleitung angeschlossen sind, die zu innerhalb der Arbeitshydraulik angeordneten Wegeventile für eine Steuerung von Funktionen des Vorsatz- oder Arbeitsgerätes führen. Die entsprechenden Wegeventile, die die innerhalb der Arbeitshydraulik des Vorsatz- oder Arbeitsgeräts vorgesehenen Verbraucher, wie beispielsweise einfachwirkende oder doppeltwirkende Hydraulikzylinder, zu deren Betätigung mit der Pumpendruckleitung und/oder der zu einem Tank führenden Tankdruckleitung verbinden, sind somit am Vorsatz- oder Arbeitsgerät angeordnet.

Dabei weist eine Zentralhydraulik des Arbeitsfahrzeugs Steuerventile zur Steuerung eines für einfachwirkende Stellfunktionen vorgesehenen ersten Druckmittelanschlusses und zweier für doppeltwirkende Stellfunktionen vorgesehene parallel betriebene zweite und dritte Druckmittelanschlüsse auf. Am entsprechenden Arbeitsfahrzeug ist somit ein Steuerventil angeordnet, das beispielsweise als 3/2-Wegeventil ausgeführt ist und über den einfachwirkenden Druckmittelanschluss einen einfachwirkenden Hubzylinder zum Heben und Senken einer Einrichtung des Vorsatz- oder Arbeitsgerätes betätigt. Weiterhin verfügt das Arbeitsfahrzeug über ein Steuerventil, das beispielsweise als 4/3-Wegeventil ausgebildet ist und über die beiden Druckmittelanschlüsse Druckräume eines doppeltwirkenden Hydraulikzylinders wahlweise mit einem Pumpendruck beaufschlagt oder drucklos mit dem Tank verbindet.

Die Druckmittelanschlüsse dienen zur hydraulischen Verbindung der Zentralhydraulik mit der Arbeitshydraulik und sind über Schlauchverbindungen und vorzugsweise Schnellverschlusskupplungen an die Arbeitshydraulik angeschlossen. Innerhalb dieser hydraulischen Verbindung ist eine Adapterventileinheit angeordnet, die stets einen Druck des ersten Druckmittelanschlusses sowie jeweils eines der beiden zweiten und dritten Druckmittelanschlüsse auf die Pumpendruckleitung überträgt, wobei einer der beiden zweiten und dritten Druckmittelanschlüsse, der sich jeweils im drucklosen Zustand befindet, mit der Tankdruckleitung verbunden ist.

Der erste Druckmittelanschluss, der über das Steuerventil der Zentralhydraulik druckbeaufschlagbar oder drucklos ist, soll im druckbeaufschlagten Zustand über die Adapterventileinheit mit der Pumpendruckleitung verbunden sein. Wie bereits dargelegt, sind die zweiten und dritten Druckmittelanschlüsse für eine doppeltwirkende Funktion abwechselnd druckbeaufschlagt oder drucklos. Daher schaltet die Adapterventileinheit selbsttätig den jeweils mit einem Pumpendruck versehenen Druckmittelanschluss auf die Pumpendruckleitung der Arbeitshydraulik und den jeweils drucklosen Druckmittelanschluss auf die Tankdruckleitung der Arbeitshydraulik. Somit werden die in der Arbeitshydraulik angeordneten Schaltventile stets einerseits mit dem Pumpendruck versorgt und sind andererseits an den Tank angeschlossen. Es bestehen dabei keine Risiken, dass durch unterschiedliche Schaltstellungen der auf der Arbeitsmaschine angeordneten Schaltventile Fehlfunktionen ausgelöst werden.

Außerdem soll eine Adapterventileinheit für eine Anordnung zwischen einer Zentralhydraulik eines Arbeitsfahrzeuges und einer Arbeitshydraulik eines mit dem Arbeitsfahrzeug kuppelbaren Vorsatz- oder Arbeitsgeräts zur Verfügung gestellt werden. Die der Erfindung zugrundeliegende Aufgabe wird dadurch gelöst, dass die Adapterventileinheit über einen ersten für einfachwirkende Stellfunktionen vorgesehenen Druckmittelanschluss und über zwei für doppeltwirkende Stellfunktionen vorgesehene parallel betriebene zweite und dritte Druckmittelanschlüsse an die Zentralhydraulik sowie an eine Pumpendruckleitung und eine Tankdruckleitung der Arbeitshydraulik anschließbar ist und dass die Adapterventileinheit stets einen Druck des ersten Druckmittelanschlusses sowie jeweils eines der beiden zweiten und dritten Druckmittelanschlüsse auf die Pumpendruckleitung überträgt und einen der beiden zweiten und dritten Druckmittelanschlüsse, der sich im drucklosen Zustand befindet, mit der Tankdruckleitung verbindet.

Wie bereits dargelegt, wird folglich der erste Druckmittelanschluss, der über das Steuerventil der Zentralhydraulik in einem druckbeaufschlagten oder drucklosen Zustand ist, im druckbeaufschlagten Zustand über die Adapterventileinheit mit der Pumpendruckleitung verbunden. Weiterhin schaltet die Adapterventileinheit selbsttätig den jeweils mit einem Pumpendruck versehenen Druckmittelanschluss der zweiten und dritten Druckmittelanschlüsse auf die Pumpendruckleitung der Arbeitshydraulik und den jeweils drucklosen Druckmittelanschluss auf die Tankdruckleitung der Arbeitshydraulik. Die in der Arbeitshydraulik angeordneten Schaltventile sind also stets mit dem Pumpendruck versorgt und außerdem auch an den Tank angeschlossen.

Demgegenüber sind nach der DE 195 36 345 C2 innerhalb der Zentralhydraulik des Mähdreschers keine hydraulischen Steuerventile vorgesehen, über die Funktionen des Schneidwerks gesteuert werden. Vielmehr gehen von der Zentralhydraulik ein mit einem Pumpendruck beaufschlagter Anschluss und ein an den Tank angeschlossener Anschluss aus. Die Funktionen des Schneidwerks werden vielmehr über im Schneidwerk vorgesehene Steuerventile, die mittels einer Elektronik betätigt werden, gesteuert.

In weiterer Ausgestaltung der Erfindung ist vorgesehen, die Adapterventileinheit ein Wegeventil aufweist, das über einen Steuerdruck des dritten Druckmittelanschlusses gegen die Kraft einer Ventilfeder hydraulisch gesteuert ist. Dabei ist das Wegeventil vorzugsweise als 4/2-Wegeventil ausgebildet, dessen Arbeitsanschlüsse zum einen jeweils mit den zweiten und dritten Druckmittelanschlüssen und zum anderen mit der Pumpendruckleitung und der Tankdruckleitung verbunden sind. Abhängig vom Steuerdruck und somit vom Druck des dritten Druckmittelanschlusses ist jeweils einer der beiden Druckmittelanschlüsse, nämlich der druckbeaufschlagte Druckmittelanschluss mit der Pumpendruckleitung und der drucklose Druckmittelanschluss mit der Tankdruckleitung verbunden. Dadurch ist gewährleistet, dass über die Pumpendruckleitung an den Steuerventilen der Arbeitshydraulik stets der Pumpendruck und eine drucklose Verbindung zum Tank zur Verfügung stehen.

In Weiterbildung der Erfindung ist vorgesehen, dass die Adapterventileinheit ein erstes zwischen dem ersten Druckmittelanschluss und der Pumpendruckleitung angeordnetes Rückschlagventil aufweist, das einen Druckmittelstrom vom ersten Druckmittelanschluss zur Pumpendruckleitung ermöglicht. Sobald von der Zentralhydraulik auf dem ersten Druckmittelanschluss Druck zur Verfügung gestellt wird, steht dieser auch über das erste Rückschlagventil der Arbeitshydraulik zur Verfügung. Die Richtung zur Zentralhydraulik zurück ist durch das erste Rückschlagventil gesperrt, um zu verhindern, dass das Druckmittel aus der Pumpendruckleitung in den ersten Druckmittelanschluss abströmt, wenn dieser über das entsprechende in der Zentralhydraulik vorgesehene Steuerventil drucklos mit dem Tank verbunden ist. Weiterhin soll das erste Rückschlagventil auch die Zentralhydraulik vor einem in der Arbeitshydraulik anstehenden Druck schützen.

Außerdem soll mit der Arbeitshydraulik verbindbaren Arbeitsanschlüssen des 4/2-Wegeventils in Richtung der entsprechenden Pumpendruckleitung bzw. der Tankdruckleitung jeweils ein Rückschlagventil nachgeschaltet sein. Dabei ist vorgesehen, dass das dem ersten Arbeitsanschluss nachgeordnete zweite Rückschlagventil eine Druckmittelströmung von der Tankdruckleitung zu dem ersten Arbeitsanschluss ermöglicht und dass das dem zweiten Arbeitsanschluss nachgeordnete dritte Rückschlagventil eine Druckmittelströmung von dem zweiten Arbeitsanschluss in die Pumpendruckleitung ermöglicht. Die Tankdruckleitung der Arbeitshydraulik ist über das zweite Rückschlagventil gegen eventuelle Druckspitzen gesichert. Ebenso kann aus der Druck aus der Arbeitshydraulik aufgrund des dritten Rückschlagventils nicht in Richtung Zentralhydraulik der Arbeitsmaschine gelangen.

Alternativ zur Verwendung eines einzigen Wegeventils in dem Adapterventileinheit kann dieses ein erstes Wegeventil und ein zweites Wegeventil aufweisen, die jeweils gegen die Kraft einer Ventilfeder hydraulisch vorgesteuert sind, wobei das erste Wegeventil und das zweite Wegeventil über einen Steuerdruck des dritten Druckmittelanschlusses betätigbar sind. Vorzugsweise ist jedes der beiden Wegeventile als 3/2-Wegeventil ausgebildet. Jedem der 3/2-Wegeventile soll dabei in Richtung der entsprechenden Pumpendruckleitung bzw. der Tankdruckleitung ein Rückschlagventil nachgeschaltet sein. Die Rückschlagventile sind funktionell in der bereits erläuterten Weise zwischen den Arbeitsanschlüssen der beiden Wegeventile und der Pumpendruckleitung bzw. der Tankdruckleitung angeordnet, so dass die vorstehend erläuterten Vorteile erzielt werden.

Die Adapterventileinheit kann in einer an das Vorsatz- oder Arbeitsgerät anschraubbaren Ventilplatte angeordnet sein. Das Vorsatz- oder Arbeitsgerät, das vorzugsweise als Erntevorsatz eines selbstfahrenden Mähdreschers ausgebildet ist, kann somit bei Bedarf mit der Adapterventileinheit versehen werden. Das ist dann der Fall, wenn einerseits am Mähdrescher der zur Ausführung eines einfachwirkenden Stellvorgang dienende erste Druckmittelanschluss sowie zwei für einen doppeltwirkenden Stellvorgang bewirkende Druckmittelanschlüsse vorgesehen sind, der Erntevorsatz aber nur zwei hydraulische Anschlüsse, nämlich einer Pumpendruckleitung und einer Tankdruckleitung aufweist.

Schließlich ist vorgesehen, dass eine in der Arbeitsmaschine angeordnete Steuereinrichtung, die den Druckmittelstrom in den Druckmittelanschlüssen steuert, mit einem elektronischen Steuermodul kombinierbar ist, das die Wegeventile der Arbeitshydraulik, die elektromagnetisch steuerbar sind, betätigt. Über die Steuereinrichtung, die bei einem selbstfahrenden Mähdrescher in einer Fahrerkabine untergebracht ist, werden Steuerventile der Zentralhydraulik betätigt. Diese sind vom Hersteller des Mähdreschers für die Steuerung von Schneidwerksfunktionen vorgesehen und bewirken eine unterschiedliche Druckbeaufschlagung bzw. ein Abströmen des Druckmittels an den mit der Adapterventileinheit verbundenen Druckmittelanschlüssen. Die an der Steuereinrichtung vorgenommenen Stellvorgänge werden auf das diesem zugeordnete Steuermodul übertragen, welches Wegeventile der Arbeitshydraulik elektromagnetisch betätigt. Auf diese Weise wird erreicht, dass bei einem entsprechenden Stellvorgang über das betätigte Steuerventil der Zentralhydraulik ein Druckmittelzufluss und ein Druckmittelabfluss an der Adapterventileinheit hergestellt wird und gleichzeitig die Wegeventile der Arbeitshydraulik in der gewünschten Weise angesteuert werden.

Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der zwei Ausführungsbeispiele vereinfacht dargestellt sind. Es zeigen:
- Figur 1: als schematische Darstellung eine Teilansicht einer als selbstfahrender Mähdrescher ausgebildete Arbeitsmaschine in einem Frontbereich, in dem diese ein als Schneidwerk dienendes Vorsatzgerät aufnimmt,
- Figur 2: einen die wesentlichen Bauelemente, die zur Erläuterung der Erfindung erforderlich sind, enthaltenden hydraulischen Schaltplan, der eine zwischen einer Zentralhydraulik des Mähdreschers und einer Arbeitshydraulik des Schneidwerks angeordnete Adapterventileinheit aufweist, und
- Figur 3: eine alternative Ausführungsform einer Adapterventileinheit, die ein einziges 4/2-Wegeventil aufweist.

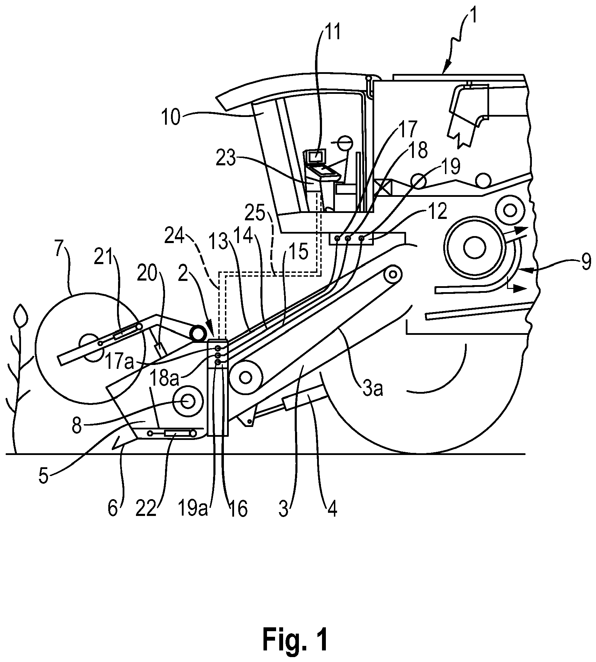

In der Figur 1 ist mit 1 ein selbstfahrender Mähdrescher bezeichnet, der gemäß der Erfindung als Arbeitsmaschine in seinem Frontbereich ein Schneidwerk 2 aufnimmt, welches das entsprechende Vorsatzgerät bildet. Das Schneidwerk 2 ist über einen Schrägförderer 3 am Mähdrescher 1 angelenkt, so dass es am Mähdrescher 1 heb- und senkbar geführt ist. Zu diesem Zweck ist der Schrägförderer 3 über einen einfachwirkenden Hubzylinder 4 am Mähdrescher abgestützt. In der Figur 1 ist das Schneidwerk 2 an den Schrägförderer 3 und somit an den Mähdrescher 1 gekuppelt, was durch eine nicht näher dargestellte mechanische Kuppeleinrichtung geschieht. Aufgrund der Breite des Schneidwerks 2 ist es nämlich erforderlich, dieses vor einer Straßenfahrt vom Schrägförderer 3 zu entkuppeln und auf einem vorzugsweise an den Mähdrescher 1 anhängbaren Transportwagen in seiner Längsrichtung zu transportieren. Neben der lösbaren mechanischen Kupplung des Schneidwerks 2 an den Mähdrescher 1 ist auch eine lösbare hydraulische Kupplung zwischen dem Schneidwerk 2 und einer Zentralhydraulik des Mähdreschers 1 erforderlich, da das Schneidwerk 2 für eine Vielzahl von hydraulischen Stellantrieben und zum Teil auch hydrostatischen Antrieben mit Druckmittel aus der Zentralhydraulik versorgt werden muss.

Das Schneidwerk 2 weist einen Schneidtisch 5 auf, der in Ernterichtung einen Mähbalken 6 aufnimmt. Weiterhin sind am Schneidwerk 2 eine Haspel 7, ein Querförderer 8 sowie an dessen äußeren Begrenzung nicht näher dargestellte Halmteiler vorgesehen. Mittig zum gesamten Schneidwerk 2 und zum Querförderer 8 liegt eine in der Darstellung ebenfalls nicht sichtbare Durchtrittsöffnung eines Einzugskanals, über welchen das Erntegut einem Kettenförderelement 3a des Schrägförderers 3 zugeführt wird. Dieses transportiert das Erntegut in ein Dreschwerk 9, das zumindest eine Dreschtrommel und einen Abscheidekorb aufweist.

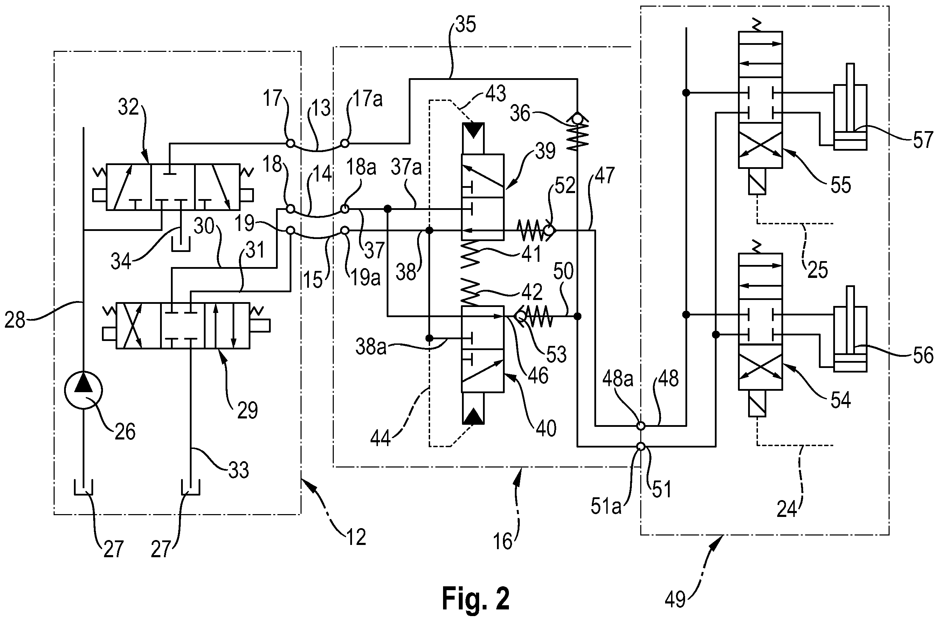

Der Mähdrescher 1 ist außerdem mit einer Fahrerkabine 10 versehen, in der sich eine Steuereinrichtung 11 zur Steuerung sämtlicher Funktionen des Mähdreschers 1 befindet. Dabei handelt es sich zum Teil um hydraulische Funktionen des Antriebs und einzelner Komponenten des Mähdreschers 1, wofür dieser eine Zentralhydraulik 12 aufweist, die in der Figur 1 nur symbolisch dargestellt ist und auf die noch im Zusammenhang mit der Figur 2 eingegangen wird. Von der Zentralhydraulik 12 gehen Hydraulikschläuche 13, 14 und 15 aus, die über Schnellkuppelsysteme, beispielsweise Remote-Anschlüsse, mit einer Adapterventileinheit 16 kuppelbar sind. Zum Trennen des Schneidwerks 2 vom Schrägförderer 3 sind diese Hydraulikschläuche 13, 14 und 15 von der Adapterventileinheit 16 zu trennen. Es ist dabei zu erkennen, dass die Zentralhydraulik zum Anschluss dieser Hydraulikschläuche 13, 14 und 15 einen ersten Druckmittelanschluss 17, einen zweiten Druckmittelanschluss 18 und einen dritten Druckmittelanschluss 19 aufweist. Diese sind mit entsprechenden Eingängen 17 a, 18 a und 19 a der Adapterventileinheit 16 über die Hydraulikschläuche 13, 14 und 15 und die zuvor erwähnten Schnellkuppelsystem verbunden.

Das Schneidwerk 2 weist eine Arbeitshydraulik auf, die nachfolgend im Zusammenhang mit der Figur 2 erläutert werden wird. Mittels dieser Arbeitshydraulik werden unterschiedliche Verstellvorgänge am Schneidwerk vorgenommen. So kann beispielsweise mittels eines einfachwirkenden Hubzylinders 20 die Haspel 7 gehoben und gesenkt werden. Weiterhin ist ein doppeltwirkender Hubzylinder 21 vorgesehen, um die Haspel 7 in Längsrichtung zu verstellen. Innerhalb des Schneidtisches 5 ist ein doppeltwirkender Hubzylinder 22 angeordnet, über den sich der Schneidtisch 5 gegenüber dem übrigen, den Querförderer 8 aufnehmenden Teil des Schneidwerks 2 in Längsrichtung verstellen lässt. Außerdem befindet sich innerhalb der Fahrerkabine 10 ein zusätzliches elektronisches Steuermodul 23, das an die Steuereinrichtung 11 angeschlossen ist und entsprechende Einstellungen, die von der Bedienperson an der Steuereinrichtung vorgenommen werden, in elektrische Signale umsetzt. Diese elektrischen Signale werden über elektrische Steuerleitungen 24 und 25 auf in Figur 2 gezeigte Steuerventile 54 und 55 der Arbeitshydraulik übertragen.

In der Figur 2 ist zur Erläuterung der Erfindung ein beispielhafter, nur auf wenige Komponenten beschränkter Aufbau der Zentralhydraulik 12 dargestellt. Diese weist eine Hydraulikpumpe 26 auf, die Druckmittel aus einem Tank 27 in eine Druckleitung 28 fördert. Die Druckleitung 28 ist mit einem ersten als 4/3-Wegeventil ausgebildeten Steuerventil 29 verbunden, das für eine doppeltwirkende Druckmittelversorgung vorgesehen ist und zu diesem Zweck über Arbeitsleitungen 30 und 31 mit dem zweiten Druckmittelanschluss 18 und dem dritten Druckmittelanschluss 19 verbunden ist. Weiterhin führt die Druckleitung 28 zu einem zweiten als 3/3-Wegeventil ausgebildeten Steuerventil 32, über das eine einfachwirkende Druckmittelversorgung realisierbar ist, wobei dieses Steuerventil 32 mit dem ersten Druckmittelanschluss 17 verbunden ist. Beide Steuerventile 29 und 32 sind im Übrigen über Rücklaufleitungen 33 und 34 mit dem Tank 27 verbindbar.

Von den Druckmittelanschlüssen 17,18 und 19 führen, wie bereits im Zusammenhang mit der Figur 1 erläutert, Hydraulikschläuche 13, 14 und 15 zu Eingängen 17a, 18a und 19a der Adapterventileinheit 16. Der erste Druckmittelanschluss 17 steht über den Hydraulikschlauch 13 und den ersten Eingang 17a mit einer ersten Leitung 35 in Verbindung, in der ein erstes Rückschlagventil 36 angeordnet ist. Das erste Rückschlagventil 36 lässt in dieser Richtung eine Strömung zu und verhindert eine Rückströmung in Richtung der Zentralhydraulik 12.

Weiterhin führen, wie bereits erläutert, die Hydraulikschläuche 14 und 15, ausgehend von den Druckmittelanschlüssen 18 und 19 zu den Eingängen 18a und 19a der Adapterventileinheit 16. Von diesen Eingängen 18a und 19a sind eine zweite Leitung 37 und eine dritte Leitung 38 sowohl mit einem ersten Wegeventil 39 als auch mit einem zweiten Wegeventil 40 verbunden. Beide Wegeventile 39 und 40 sind als 3/2-Wegeventile ausgebildet und hydraulisch gegen die Kraft von Ventilfedern 41 bzw. 42 betätigbar. Die hydraulische Betätigung erfolgt dabei, ausgehend von der zweiten Leitung mittels jeweils einer Steuerleitung 43 bzw. 44.

Dabei weisen beide Wegeventile 39 und 40 eine erste in der Figur 2 dargestellte Schaltstellung auf, in der das erste Wegeventil 39 das Druckmittel aus der zweiten Leitung 37 in einen Arbeitsanschluss 45 und das Druckmittel aus der zweiten Leitung in einen Arbeitsanschluss 46 führen. Dabei ist zwar jeweils ein Zweig 37a und 38a dieser Leitungen 37 und 38 zum entsprechenden anderen Wegeventil 39 bzw. 40 geführt, der aber in der ersten Schaltstellung gesperrt ist. Austrittsseitig ist am ersten Wegeventil 39 eine Verbindungsleitung 47 vorgesehen, die über eine Kuppelvorrichtung 48a mit einer Tankdruckleitung 48 einer Arbeitshydraulik 49 des Schneidwerks 2 verbunden ist.

Gemeinsam mit der ersten Leitung 35, die vom ersten Rückschlagventil 36 weitergeführt ist, wird eine vom zweiten Wegeventil 40 ausgehende Verbindungsleitung 50 über eine hydraulische Kuppelvorrichtung 51a an eine Pumpendruckleitung 51 der Arbeitshydraulik 49 angeschlossen. Dabei ist innerhalb der mit der Tankdruckleitung 48 verbundenen Verbindungsleitung 47 ein zweites Rückschlagventil 52 angeordnet, das eine Druckmittelverbindung über das erste Wegeventil 39 jeweils zum Rücklauf in den Tank 27 ermöglicht. In der Verbindungsleitung 50 ist ein drittes Rückschlagventil 53 angeordnet, dass einen Druckmittelstrom über das zweite Wegeventil 40 in dessen beiden Schaltstellungen in die Pumpendruckleitung 51 zulässt.

Die beiden 3/2-Wegeventile 39 und 40 sind gemeinsam mit den drei Rückschlagventilen 36, 52 und 53 derart verschaltet, dass stets ein in der ersten Leitung 35 anstehender Pumpendruck auf die Pumpendruckleitung 51 übertragen wird, dass stets die jeweils druckführende zweite oder dritte Leitung 37 bzw. 38 mit der Pumpendruckleitung 51 verbunden wird, und dass die jeweils drucklose Leitung 37 oder 38 an die Tankdruckleitung 48 angeschlossen wird.

In der Arbeitshydraulik 49 sind beispielhaft zwei als 4/3-Wegeventile ausgebildete Steuerventile 54 und 55 vorgesehen, die zur Verstellung zweier doppelt wirkender Hydraulikzylinder 56 und 57 dienen. Diese beiden Steuerventile 54 und 55 sind elektromagnetisch gesteuert, wobei entsprechende elektrische Steuerleitungen, die in der Figur 1 mit 24 und 25 bezeichnet sind, zu dem Steuermodul 23 der Figur 1 führen. Darüber hinaus kann innerhalb der Arbeitshydraulik 49 natürlich auch noch ein weiteres Steuerventil vorgesehen sein, mit dem beispielsweise ein einfach wirkender Hydraulikzylinder betätigt wird.

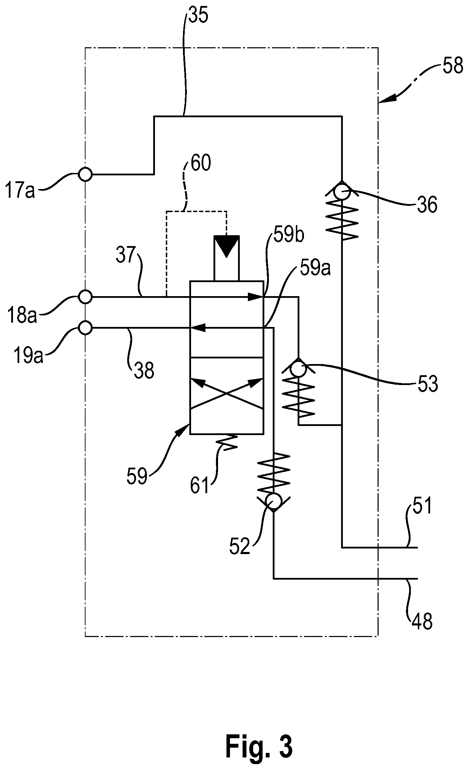

Eine alternative Ausführungsform einer Adapterventileinheit 58 ist in der Figur 3 dargestellt. Diese unterscheidet sich von der Lösung nach der Figur 2 dadurch, dass anstelle zweier 3/2-Wegeventile ein einziges hydraulisch gesteuertes 4/2-Wegeventil 59 verwendet wird. Bauelemente dieser Adapterventileinheit 58 stimmen im Übrigen zumindest zum Teil mit denen der zuvor beschriebenen Adapterventileinheit 16 der Figur 2 überein. Außerdem soll die Adapterventileinheit 58 in der gleichen Weise zwischen der Zentralhydraulik 12 und der Arbeitshydraulik 49 angeordnet sein. Nachfolgend wird diese Lösung anhand sowohl der Figur 2 als auch der Figur 3 beschrieben, und es werden für gleiche Teile die gleichen Bezugszeichen verwendet.

Der Eingang 17a der Adapterventileinheit 58 soll ebenfalls zur einfachwirkenden Druckmittelversorgung an den ersten Druckmittelanschluss 17 der Zentralhydraulik 12 angeschlossen sein. Von diesem geht die erste Leitung 35 aus, in der das erste Rückschlagventil 36 angeordnet ist. Die zweite Leitung 37 und die dritte Leitung 38 führen unmittelbar von den Eingängen 18a und 19a, die, für eine doppeltwirkende Funktion gesteuert, mit Druckmittel versorgt werden, zu dem einzigen 4/2-Wegeventil 59. Dieses soll in seinen beiden Schaltstellungen abwechselnd einen der beiden Druckmittelanschlüsse 18 oder 19 mit der Pumpendruckleitung 51 oder der Tankdruckleitung 48 verbinden, wofür es Arbeitsanschlüsse 59a und 59b aufweist. Ein Steuerschieber des 4/2-Wegeventils 59 ist einerseits über eine Steuerleitung 60 mit dem jeweiligen Druck der zweiten Leitung 37 und andererseits mit der Federkraft einer Ventilfeder 61 beaufschlagt. Auch mit einer derartigen Adapterventileinheit 58 kann somit in Abhängigkeit vom Druck einer der beiden Druckmittelanschlüsse 18 oder 19 eine Verbindung zur Pumpendruckleitung 51 oder zur Tankdruckleitung 48 hergestellt werden.

### Bezugszeichen

- 1: Mähdrescher
- 2: Schneidwerk
- 3: Schrägförderer
- 3a: Kettenförderelement
- 4: Hubzylinder
- 5: Schneidtisch
- 6: Mähbalken
- 7: Haspel
- 8: Querförderer
- 9: Dreschwerk
- 10: Fahrerkabine
- 11: Steuereinrichtung
- 12: Zentralhydraulik
- 13: Hydraulikschlauch
- 14: Hydraulikschlauch
- 15: Hydraulikschlauch
- 16: Adapterventileinheit
- 17: erster Druckmittelanschluss
- 17a: erster Eingang von 16
- 18: zweiter Druckmittelanschluss
- 18a: zweiter Eingang von 16
- 19: dritter Druckmittelanschluss
- 19a: dritter Eingang von 16
- 20: einfachwirkender Hubzylinder
- 21: doppeltwirkender Hubzylinder
- 22: doppeltwirkender Hubzylinder
- 23: Steuermodul
- 24: elektrische Steuerleitung
- 25: elektrische Steuerleitung
- 26: Hydraulikpumpe
- 27: Tank
- 28: Druckleitung
- 29: erstes Steuerventil
- 30: Arbeitsleitung
- 31: Arbeitsleitung
- 32: Steuerventil
- 33: Rücklaufleitung
- 34: Rücklaufleitung
- 35: erste Leitung
- 36: erstes Rückschlagventil
- 37: zweite Leitung
- 38: dritte Leitung
- 39: erstes 3/2-Wegeventil
- 40: zweites 3/2-Wegeventil
- 41: Ventilfeder
- 42: Ventilfeder
- 43: Steuerleitung
- 44: Steuerleitung
- 45: Arbeitsanschluss
- 46: Arbeitsanschluss
- 47: Verbindungsleitung
- 48: Tankdruckleitung
- 48a: Kuppelvorrichtung von 48
- 49: Arbeitshydraulik
- 50: Verbindungsleitung
- 51: Pumpendruckleitung
- 51a: Kuppelvorrichtung von 51
- 52: zweites Rückschlagventil
- 53: drittes Rückschlagventil
- 54: Steuerventil
- 55: Steuerventil
- 56: doppeltwirkender Hydraulikzylinder
- 57: doppeltwirkender Hydraulikzylinder
- 58: Adapterventileinheit
- 59: 4/2-Wegeventil
- 59a: Arbeitsanschluss von 59
- 59b: Arbeitsanschluss von 59
- 60: Steuerleitung

## Patentansprüche

1. Hydraulische Druckmittelversorgung umfassend ein land- oder bauwirtschaftlich nutzbares Arbeitsfahrzeug (1) sowie ein daran kuppelbares Vorsatz- oder Arbeitsgerät (2), wobei eine hydraulische Kuppelvorrichtung (48a, 51a) einer Arbeitshydraulik (49) des Vorsatz- oder Arbeitsgerätes (2) eine Pumpendruckleitung (51) und eine Tankdruckleitung (48) aufweist, die mit innerhalb der Arbeitshydraulik (49) angeordneten Steuerventilen (54 und 55) zur Steuerung von Funktionen des Vorsatz- oder Arbeitsgerätes (2) verbunden sind, **dadurch gekennzeichnet, dass** eine Zentralhydraulik (12) des Arbeitsfahrzeugs (1) Steuerventile (29 und 32) zur Steuerung eines für einfachwirkende Stellfunktionen vorgesehenen ersten Druckmittelanschlusses (17) und zweier für doppeltwirkende Stellfunktionen vorgesehenen parallel betriebenen zweiten und dritten Druckmittelanschlüssen (18 und 19) aufweist,
wobei die Druckmittelanschlüsse (17, 18 und 19) zur hydraulischen Verbindung mit der Arbeitshydraulik (49) vorgesehen sind, und dass innerhalb dieser hydraulischen Verbindung eine Adapterventileinheit (16, 58) angeordnet ist, die stets einen Druck des ersten Druckmittelanschlusses (17) sowie jeweils eines der beiden zweiten und dritten Druckmittelanschlüsse (18, 19) auf die Pumpendruckleitung (51) überträgt, wobei einer der beiden zweiten und dritten Druckmittelanschlüsse (18 oder 19), der sich jeweils im drucklosen Zustand befindet, mit der Tankdruckleitung (48) verbunden ist.

2. Adapterventileinheit (16, 58) für eine Anordnung zwischen einer Zentralhydraulik (12) eines Arbeitsfahrzeuges (1) und einer Arbeitshydraulik (49) eines mit dem Arbeitsfahrzeug (1) kuppelbaren Vorsatz- oder Arbeitsgeräts (2), **dadurch gekennzeichnet, dass** die Adapterventileinheit (16, 58) über einen ersten für einfachwirkende Stellfunktionen vorgesehenen Druckmittelanschluss (17) und über zwei für doppeltwirkende Stellfunktionen vorgesehene parallel betriebene zweite und dritte Druckmittelanschlüsse (18 und 19) an die Zentralhydraulik (12) sowie an eine Pumpendruckleitung (51) und eine Tankdruckleitung (48) der Arbeitshydraulik (49) anschließbar ist und dass die Adapterventileinheit (16, 58) stets einen Druck des ersten Druckmittelanschlusses (17) sowie jeweils eines der beiden zweiten und dritten Druckmittelanschlüsse (18 oder 19) auf die Pumpendruckleitung (51) überträgt und einen der beiden zweiten und dritten Druckmittelanschlüsse (18 oder 19), der sich im drucklosen Zustand befindet, mit der Tankdruckleitung (48) verbindet.

3. Hydraulische Druckmittelversorgung oder Adapterventileinheit nach einem der Patentansprüche 1 oder 2, **dadurch gekennzeichnet, dass** die Adapterventileinheit (16, 58) ein Wegeventil (59) aufweist, das über einen Steuerdruck des zweiten Druckmittelanschlusses (18) gegen die Kraft einer Ventilfeder (61) hydraulisch gesteuert ist.

4. Hydraulische Druckmittelversorgung oder Adapterventileinheit nach Patentanspruch 3, **dadurch gekennzeichnet, dass** das Wegeventil (59) als 4/2-Wegeventil ausgebildet ist.

5. Hydraulische Druckmittelversorgung oder Adapterventileinheit nach Patentanspruch 4, **dadurch gekennzeichnet, dass** den mit der Arbeitshydraulik (49) verbindbaren Arbeitsanschlüssen des 4/2-Wegeventils (59) in Richtung der entsprechenden Pumpendruckleitung (51) bzw. der Tankdruckleitung (48) jeweils ein Rückschlagventil (52, 53) nachgeschaltet ist.

6. Hydraulische Druckmittelversorgung oder Adapterventileinheit nach einem der Patentansprüche 1 oder 2, **dadurch gekennzeichnet, dass** die Adapterventileinheit ein erstes zwischen dem ersten Druckmittelanschluss (17) und der Pumpendruckleitung (51)angeordnetes Rückschlagventil (36) aufweist, das einen Druckmittelstrom vom ersten Druckmittelanschluss (17) zur Pumpendruckleitung (51) ermöglicht.

7. Hydraulische Druckmittelversorgung oder Adapterventileinheit nach Patentanspruch 5, **dadurch gekennzeichnet, dass** das einem ersten Arbeitsanschluss (59a) des Wegeventils (59) nachgeordnete erste Rückschlagventil (52) eine Druckmittelströmung von der Tankdruckleitung (48) zu dem ersten Arbeitsanschluss (59a) ermöglicht und dass das einem zweiten Arbeitsanschluss (59b) des Wegeventils (59) nachgeordnete zweite Rückschlagventil (53) eine Druckmittelströmung von dem zweiten Arbeitsanschluss (59b) in die Pumpendruckleitung (51) ermöglicht.

8. Hydraulische Druckmittelversorgung oder Adapterventileinheit nach Patentanspruch 7, **dadurch gekennzeichnet, dass** das 4/2-Wegeventil (59) in einer ersten über die Federkraft der Ventilfeder (61) bewirkten Schaltstellung die Tankdruckleitung (48) über das erste Rückschlagventil (52) mit dem dritten Druckmittelanschluss (19) sowie den zweiten Druckmittelanschluss (18) über das zweite Rückschlagventil (53) mit der Pumpendruckleitung (51) verbindet und dass das 4/2-Wegeventil (59) in einer zweiten Schaltstellung die Tankdruckleitung (48) über das erste Rückschlagventil (52) mit dem zweiten Druckmittelanschluss (18) sowie den dritten Druckmittelanschluss (19) über das zweite Rückschlagventil (53) mit der Pumpendruckleitung (51) verbindet.

9. Hydraulische Druckmittelversorgung oder Adapterventileinheit nach einem der Patentansprüche 1 oder 2, **dadurch gekennzeichnet, dass** die Adapterventileinheit (16) ein erstes Wegeventil (39) und ein zweites Wegeventil (40) aufweist, die jeweils gegen die Kraft einer Ventilfeder (41, 42) hydraulisch vorgesteuert sind, wobei das erste Wegeventil (39) und das zweite Wegeventil (40) über einen Steuerdruck des zweiten oder dritten Druckmittelanschlusses (18 oder 19) betätigbar sind.

10. Hydraulische Druckmittelversorgung oder Adapterventileinheit nach Patentanspruch 8, **dadurch gekennzeichnet, dass** die beiden Wegeventile (39 und 40) jeweils als 3/2-Wegeventile ausgebildet sind, wobei jedem der 3/2-Wegeventile (39, 40) in Richtung der entsprechenden Pumpendruckleitung (51) bzw. der Tankdruckleitung (48) jeweils ein Rückschlagventil (52 und 53) nachgeschaltet ist.

11. Hydraulische Druckmittelversorgung oder Adapterventileinheit nach Patentanspruch 10, **dadurch gekennzeichnet, dass** das erste Wegeventil (39) in seinen beiden Schaltstellungen die Tankdruckleitung (48) über das erste Rückschlagventil (52) wahlweise mit dem zweiten Druckmittelanschluss (18) oder dem dritten Druckmittelanschluss (19) verbindet und dass das zweite Wegeventil (40) wahlweise den zweiten Druckmittelanschluss (18) oder den dritten Druckmittelanschluss (19) über das zweite Rückschlagventil (53) mit der Pumpendruckleitung (51) verbindet.

12. Hydraulische Druckmittelversorgung oder Adapterventileinheit nach einem der Patentansprüche 1 oder 2, **dadurch gekennzeichnet, dass** die Adapterventileinheit (16, 58) in einer an das Vorsatz- oder Arbeitsgerät (2) anschraubbaren Ventilplatte angeordnet ist.

13. Hydraulische Druckmittelversorgung nach Patentanspruch 1, **dadurch gekennzeichnet, dass** eine in der Arbeitsmaschine (1) angeordnete Steuereinrichtung (11), die den Druckmittelstrom in den Druckmittelanschlüssen (17, 18 und 19) steuert, mit einem elektronischen Steuermodul (23) kombinierbar ist, das die Steuerventile (54, 55) der Arbeitshydraulik (49), die elektromagnetisch steuerbar sind, betätigt.

## Claims

1. A hydraulic pressure medium supply comprising a working vehicle (1) which can be used in the agricultural or construction industry as well as a front attachment or implement (2) which can be coupled thereto, wherein a hydraulic coupling device (48a, 51a) of a working hydraulic system (49) of the front attachment or implement (2) has a pump pressure line (51) and a reservoir pressure line (48) which are connected to control valves (54 and 55) disposed inside the working hydraulic system (49) to control functions of the front attachment or implement (2), **characterized in that** a central hydraulic system (12) of the working vehicle (1) has control valves (29 and 32) for controlling a first pressure medium connection (17) provided for single-acting adjustment functions and two second and third pressure medium connections (18 and 19) which are operated in parallel for double-acting adjustment functions, wherein the pressure medium connections (17, 18 and 19) are provided for hydraulic connection to the working hydraulic system (49), and **in that** an adapter valve unit (16, 58) is disposed inside this hydraulic connection which constantly transmits a pressure from the first pressure medium connection (17) as well as from a respective one of the two second and third pressure medium connections (18, 19) to the pump pressure line (51), wherein one of the two second and third pressure medium connections (18 or 19) which is in the respective unpressurized state is connected to the reservoir pressure line (48).

2. An adapter valve unit (16, 58) for an assembly between a central hydraulic system (12) of a working vehicle (1) and a working hydraulic system (49) of a front attachment or implement (2) which can be coupled to the working vehicle (1), **characterized in that** the adapter valve unit (16, 58) can be connected via a first pressure medium connection (17) provided for single-acting adjustment functions and via two second and third pressure medium connections (18 and 19) which are operated in parallel for double-acting adjustment functions to the central hydraulic system (12) as well as to a pump pressure line (51) and a reservoir pressure line (48) of the working hydraulic system (49) and **in that** the adapter valve unit (16, 58) constantly transmits a pressure from the first pressure medium connection (17) as well as a respective one of the two second and third pressure medium connections (18 or 19) to the pump pressure line (51) and one of the two second and third pressure medium connections (18 or 19) which is in the unpressurized state is connected to the reservoir pressure line (48).

3. The hydraulic pressure medium supply or adapter valve unit according to patent claim 1 or patent claim 2, **characterized in that** the adapter valve unit (16, 58) has a directional control valve (59) which is hydraulically controlled via a control pressure from the second pressure medium connection (18) against the force of a valve spring (61).

4. The hydraulic pressure medium supply or adapter valve unit according to patent claim 3, **characterized in that** the directional control valve (59) is configured as a 4/2 directional control valve.

5. The hydraulic pressure medium supply or adapter valve unit according to patent claim 4, **characterized in that** a respective non-return valve (52, 53) is positioned downstream in the direction of the corresponding pump pressure line (51) or reservoir pressure line (48) of the working connections of the 4/2 directional control valve (59) which can be connected to the working hydraulic system (49).

6. The hydraulic pressure medium supply or adapter valve unit according to patent claim 1 or patent claim 2, **characterized in that** the adapter valve unit has a first non-return valve (36) disposed between the first pressure medium connection (17) and the pump pressure line (51) which allows pressure medium to flow from the first pressure medium connection (17) to the pump pressure line (51).

7. The hydraulic pressure medium supply or adapter valve unit according to patent claim 5, **characterized in that** a first non-return valve (52) disposed downstream of a first working connection (59a) of the directional control valve (59) allows pressure medium to flow from the reservoir pressure line (48) to the first working connection (59a) and **in that** a second non-return valve (53) disposed downstream of a second working connection (59b) of the directional control valve (59) allows pressure medium to flow from the second working connection (59b) into the pump pressure line (51).

8. The hydraulic pressure medium supply or adapter valve unit according to patent claim 7, **characterized in that** in a first switch position actuated via the resilient force of the valve spring (61), the 4/2 directional control valve (59) connects the reservoir pressure line (48) to the third pressure medium connection (19) via the first non-return valve (52) as well as the second pressure medium connection (18) to the pump pressure line (51) via the second non-return valve (53) and **in that** in a second switch position, the 4/2 directional control valve (59) connects the reservoir pressure line (48) to the second pressure medium connection (18) via the first non-return valve (52) as well as the third pressure medium connection (19) to the pump pressure line (51) via the second non-return valve (53).

9. The hydraulic pressure medium supply or adapter valve unit according to patent claim 1 or patent claim 2, **characterized in that** the adapter valve unit (16) has a first directional control valve (39) and a second directional control valve (40) which are respectively hydraulically pilot operated against the force of a valve spring (41, 42), wherein the first directional control valve (39) and the second directional control valve (40) can be actuated via a control pressure from the second or third pressure medium connection (18 or 19).

10. The hydraulic pressure medium supply or adapter valve unit according to patent claim 8, **characterized in that** the two directional control valves (39 and 40) are respectively configured as 3/2 directional control valves, wherein a respective non-return valve (52 and 53) is positioned downstream of each of the 3/2 directional control valves (39, 40) in the direction of the corresponding pump pressure line (51) or reservoir pressure line (48).

11. The hydraulic pressure medium supply or adapter valve unit according to patent claim 10, **characterized in that** in its two switch positions, the first directional control valve (39) selectively connects the reservoir pressure line (48) to the second pressure medium connection (18) or the third pressure medium connection (19) via the first non-return valve (52) and **in that** the second directional control valve (40) selectively connects the second pressure medium connection (18) or the third pressure medium connection (19) to the pump pressure line (51) via the second non-return valve (53).

12. The hydraulic pressure medium supply or adapter valve unit according to patent claim 1 or patent claim 2, **characterized in that** the adapter valve unit (16, 58) is disposed in a valve plate which can be screwed to the front attachment or implement (2).

13. The hydraulic pressure medium supply according to patent claim 1, **characterized in that** a control device (11) disposed in the working machine (1) which controls the flow of pressure medium in the pressure medium connections (17, 18 and 19) can be combined with an electronic control module (23) which actuates the control valves (54, 55) of the working hydraulic system (49) which are electromagnetically controllable.

## Revendications

1. Alimentation en agent de pression hydraulique incluant un véhicule de travail utilisable en agriculture ou dans les travaux publics (1) ainsi qu'un outil frontal ou de travail (2) couplable à celui-ci, un dispositif de couplage hydraulique (48a, 51a) d'une hydraulique de travail (49) de l'outil frontal ou de travail (2) comportant une conduite de pression de pompe (51) et une conduite de pression de réservoir (48) qui sont reliées à des valves de commande (54 et 55) disposées à l'intérieur de l'hydraulique de travail (49) pour commander des fonctions de l'outil frontal ou de travail (2), **caractérisée en ce qu'**une hydraulique centrale (12) du véhicule de travail (1) comporte des valves de commande (29 et 32) pour commander un premier raccord d'agent de pression (17) prévu pour des fonctions de réglage à simple effet et des deuxième et troisième raccords d'agent de pression fonctionnant en parallèle (18 et 19) prévus pour des fonctions de réglage à double effet, les raccords d'agent de pression (17, 18 et 19) étant prévus pour une liaison hydraulique avec l'hydraulique de travail (49), et **en ce qu'**à l'intérieur de cette liaison hydraulique est disposée une unité de valve adaptatrice (16, 58), qui transmet constamment une pression du premier raccord d'agent de pression (17), ainsi que respectivement d'un des deux deuxième et troisième raccords d'agent de pression (17) à la conduite de pression de pompe (51), un des deux deuxième et troisième raccords d'agent de pression (18 ou 19), qui se trouve respectivement à l'état sans pression, étant relié à la conduite de pression de réservoir (48) .

2. Unité de valve adaptatrice (16, 58) pour une disposition entre une hydraulique centrale (12) d'un véhicule de travail (1) et une hydraulique de travail (49) d'un outil frontal ou de travail (2) couplable au véhicule de travail (1), **caractérisée en ce que** l'unité de valve adaptatrice (16, 58) est raccordable par l'intermédiaire d'un premier raccord d'agent de pression (17) prévu pour des fonctions de réglage à simple effet et par l'intermédiaire de deux deuxième et troisième raccords d'agent de pression fonctionnant en parallèle (18 et 19) prévus pour des fonctions de réglage à double effet à l'hydraulique centrale (12) ainsi qu'à une conduite de pression de pompe (51) et à une conduite de pression de réservoir (48) de l'hydraulique de travail (49), et **en ce que** l'unité de valve adaptatrice (16, 58) transfère constamment une pression du premier raccord d'agent de pression (17) ainsi que respectivement d'un des deux deuxième et troisième raccords d'agent de pression (18 ou 19) à la conduite de pression de pompe (51) et relie un des deux deuxième et troisième raccords d'agent de pression (18 ou 19), qui se trouve à l'état sans pression, à la conduite de pression de réservoir (48) .

3. Alimentation en agent de pression hydraulique ou unité de valve adaptatrice selon une des revendications 1 ou 2, **caractérisée en ce que** l'unité de valve adaptatrice (16, 58) comporte une valve directionnelle (59) qui est commandée hydrauliquement par l'intermédiaire d'une pression de commande du deuxième raccord d'agent de pression (18) à l'encontre de la force d'un ressort de valve (61).

4. Alimentation en agent de pression hydraulique ou unité de valve adaptatrice selon la revendication 3, **caractérisée en ce que** la valve directionnelle (59) est conformée en valve directionnelle à 4 voies/2 positions.

5. Alimentation en agent de pression hydraulique ou unité de valve adaptatrice selon la revendication 4, **caractérisée en ce qu'**aux raccords de travail de la valve directionnelle à 4 voies/2 positions (59) reliable à l'hydraulique de travail (49) succède, en direction de la conduite de pression de pompe correspondante (51), respectivement de la conduite de pression de réservoir (48), respectivement une valve antiretour (52, 53).

6. Alimentation en agent de pression hydraulique ou unité de valve adaptatrice selon une des revendications 1 ou 2, **caractérisée en ce que** l'unité de valve adaptatrice comporte une première valve antiretour (36) qui est disposée entre le premier raccord d'agent de pression (17) et la conduite de pression de pompe (51) et qui autorise une circulation d'agent de pression du premier raccord d'agent de pression (17) vers la conduite de pression de pompe (51).

7. Alimentation en agent de pression hydraulique ou unité de valve adaptatrice selon la revendication 5, **caractérisée en ce que** la première valve antiretour (52) succédant à un premier raccord de travail (59a) de la valve directionnelle (59) autorise une circulation d'agent de pression de la conduite de pression de réservoir (48) vers le premier raccord de travail (59a), et **en ce que** la deuxième valve antiretour (53) succédant à un deuxième raccord de travail (59b) de la valve directionnelle (59) autorise une circulation d'agent de pression du deuxième raccord de travail (59b) vers la conduite de pression de pompe (51).

8. Alimentation en agent de pression hydraulique ou unité de valve adaptatrice selon la revendication 7, **caractérisée en ce que** la valve directionnelle à 4 voies/2 positions (59) relie, dans une première position de commutation provoquée par l'intermédiaire de la force élastique du ressort de valve (61), la conduite de pression de réservoir (48) à travers la première valve antiretour (52) au troisième raccord d'agent de pression (19) ainsi que le deuxième raccord d'agent de pression (18) à travers la deuxième valve antiretour (53) à la conduite de pression de pompe (51), et **en ce que** la valve directionnelle à 4 voies/2 positions (59), dans une deuxième position de commutation, relie la conduite de pression de réservoir (48) à travers la première valve antiretour (52) au deuxième raccord d'agent de pression (18) ainsi que le troisième raccord d'agent de pression (19) à travers la deuxième valve antiretour (53) à la conduite de pression de pompe (51).

9. Alimentation en agent de pression hydraulique ou unité de valve adaptatrice selon une des revendications 1 ou 2, **caractérisée en ce que** l'unité de valve adaptatrice (16) comporte une première valve directionnelle (39) et une seconde valve directionnelle (40) qui sont respectivement pilotées hydrauliquement à l'encontre de la force d'un ressort de valve (41, 42), la première valve directionnelle (39) et la seconde valve directionnelle (40) étant actionnables par l'intermédiaire d'une pression de commande du deuxième ou troisième raccord d'agent de pression (18 ou 19) .

10. Alimentation en agent de pression hydraulique ou unité de valve adaptatrice selon la revendication 8, **caractérisée en ce que** les deux valves directionnelles (39 et 40) sont conformées respectivement en valves directionnelles à 3 voies/2 positions, à chacune des valves directionnelles à 3 voies/2 positions (39, 40) succédant en direction de la conduite de pression de pompe correspondante (51), respectivement de la conduite de pression de réservoir (48) respectivement une valve antiretour (52 et 53).

11. Alimentation en agent de pression hydraulique ou unité de valve adaptatrice selon la revendication 10, **caractérisée en ce que** la première valve directionnelle (39) dans ses deux positions de commutation la conduite de pression de réservoir (48) relie à travers la première valve antiretour (52) sélectivement au deuxième raccord d'agent de pression (18) ou au troisième raccord d'agent de pression (19), et **en ce que** la seconde valve directionnelle (40) relie sélectivement le deuxième raccord d'agent de pression (18) ou le troisième raccord d'agent de pression (19) à travers la deuxième valve antiretour (53) à la conduite de pression de pompe (51).

12. Alimentation en agent de pression hydraulique ou unité de valve adaptatrice selon une des revendications 1 ou 2, **caractérisée en ce que** l'unité de valve adaptatrice (16, 58) est disposée dans une plaque à valves vissable sur l'outil frontal ou de travail (2).

13. Alimentation en agent de pression hydraulique selon la revendication 1, **caractérisée en ce qu'**un équipement de commande (11) qui est disposé dans la machine de travail (1) et qui commande la circulation d'agent de pression dans les raccords d'agent de pression (17, 18 et 19) est combinable avec un module de commande électronique (23) qui actionne les valves de commande (54, 55) de l'hydraulique de travail (49), lesquelles sont commandables électromagnétiquement.
